# EUROPEAN PATENT APPLICATION

(11) **EP 4 722 167 A1**
(43) Date of publication of application: **08.04.2026**
(21) Application number: 24819364.1
(22) Date of filing: 05.06.2024
(51) Int. Cl.: C02F 1/48, C02F 1/28, C02F 1/42, C02F 1/44, C02F 1/78, C02F 9/00

(54) **WATER TREATMENT APPARATUS AND WATER TREATMENT METHOD**

(30) Priority: 05.06.2023 JP 2023092028
(71) Applicant: Meidensha Corporation, Tokyo 141-6029 (JP)
(72) Inventor: WATANABE, Tetsufumi, Tokyo 141-6029 (JP); NAKAGAWA, Akitoshi, Tokyo 141-6029 (JP); MIURA, Toshinori, Tokyo 141-6029 (JP); KATO, Naoki, Tokyo 141-6029 (JP)
(74) Representative: Müller-Boré & Partner Patentanwälte PartG mbB
(86) International application number: PCT/JP2024/020557
(87) International publication number: WO 2024/253136

(57) **Abstract**

A water treatment apparatus 1 is provided with a storage tank 2 for water to be filtered, an ozone water mixing tank 6, and a pulse plasma discharge tank 7. The storage tank 2 for water to be filtered stores water to be filtered that contains a substance to be treated that is subjected to filtration. The ozone water mixing tank 6 is for mixing, with ozone water, concentrated effluent of substance to be treated in which the substance to be treated separated from the water to be filtered by the filtration is concentrated. The pulse plasma discharge tank 7 is for supplying pulse plasma to the mixed liquid of the concentrated effluent of substance to be treated and the ozone water.

## Description

### TECHNICAL FIELD

The present invention relates to a water treatment technology for decomposing organic matter contained in water, particularly a water treatment technology for decomposing recalcitrant organic matter.

### BACKGROUND TECHNOLOGY

Surface plasma discharge is utilized to purify water quality for ensuring drinking water, industrial water, and treating various industrial wastewater and lake water (for example, patent document 1).

The water treatment apparatus of the patent document 1 performs purification treatment, such as decomposing organic matter and chemical substances within water to be treated, by disposing a cathode in the liquid phase of a reaction tank into which the water to be treated is introduced, while disposing an anode in the gas phase of the reaction tank and inducing a plasma discharge between the cathode and the anode.

### PRIOR ART DOCUMENT(S)

### PATENT DOCUMENT(S)

Patent Document 1: Japanese Patent Application Publication No. 2015-97975
Patent Document 2: Japanese Patent Application Publication No. 2005-111296
Patent Document 3: Japanese Patent No. 6702514
Patent Document 4: Japanese Patent No. 4296393
Patent Document 5: Japanese Patent Application Publication No. 2006-297240
Patent Document 6: Japanese Patent Application Publication No. 2018-38955

### NON-PATENT DOCUMENT(S)

Non-Patent Document 1: Takanori IIjima, Ryutaro MAKISE, Takaaki MURATA "OH Radical Generator for Waste Water Treatment Containing Recalcitrant Organic Matter" Toshiba Review Vol. 61 No. 8 (2006)
Non-Patent Document 2: S. Horikoshi, S. Sato, M. Abe and N. Serpone, A novel liquid plasma AOP device integrating microwaves and ultrasounds and its evaluation in defluorinating perfluorooctanoic acid in aqueous media, Ultrason. Sonochem., 2011, 18, 938-942

### SUMMARY OF THE INVENTION

The patent document 1 describes an example of the water treatment apparatus applied to purify lake water. In this example, raw water is supplied to a pretreatment apparatus equipped with a filter, an aeration tank, and an adsorption filter tank (a charcoal tank and a zeolite tank), and the obtained pretreated water is supplied to the water treatment apparatus.

However, since the raw water needs to be treated in the water treatment apparatus after being treated by the pretreatment apparatus, the time (retention time) required for the raw water to pass through the water treatment system, including the pretreatment apparatus and the water treatment apparatus, to be obtained as reclaimed water becomes long. It is desirable that the time required to treat industrial wastewater in the water treatment system and regenerate it as industrial water is short.

Furthermore, since there is no process to concentrate organic matter and chemical substances (hereinafter also referred to as a "substance to be treated") in the raw water, the concentration of substances to be treated in the pretreated water obtained by the pretreatment apparatus becomes very low. Treating substances to be treated at low concentrations using high-energy methods such as ozone or plasma discharge is inefficient.

Furthermore, no consideration has been given to how to treat the substances to be treated adsorbed in the pretreatment apparatus, particularly in the above-mentioned adsorption filter tank. The filtration capacity of the adsorption filter tank gradually decreases during continuous use. When the filtration capacity drops below a certain level, the filter media in the adsorption filter tank undergoes cleaning with water or water containing acid or base, such as surface washing or backwashing, to restore the filtration capacity. Since the water used to clean the filter media contains the substances to be treated separated from the raw water at a high concentration, it is necessary to perform detoxification of these substances.

In view of the above technical problem, an object of the present invention is to obtain reusable water in a relatively short time after supplying raw water to the water treatment. In addition, it also aims to process, in an energy-efficient manner, the effluent containing the concentrated substance to be treated generated during the water treatment process.

Therefore, the water treatment apparatus in one aspect of the present invention includes: a storage tank for water to be filtered for storing the water to be filtered that contains a substance to be treated that is subjected to filtration; an ozone water mixing tank for mixing, with ozone water, concentrated effluent of the substance to be treated in which the substance to be treated separated from the water to be filtered by the filtration is concentrated; and a pulse plasma discharge tank for supplying pulse plasma to the mixed liquid of the concentrated effluent of the substance to be treated and the ozone water.

In one aspect of the present invention, the water treatment apparatus is configured such that a power supply is provided that is capable of generating the pulse plasma that breaks an interatomic bond of the substance to be treated that has a bond energy higher than an oxidation potential of a hydroxyl radical.

In one aspect of the present invention, the water treatment apparatus is configured such that the interatomic bond is a bond between carbon and fluorine.

In one aspect of the present invention, the water treatment apparatus is configured such that the concentrated effluent of the substance to be treated is generated during a regeneration process of an adsorbent added to the storage tank for the water to be filtered.

In one aspect of the present invention, the water treatment apparatus is configured such that the mixed liquid is aerated with air.

In one aspect of the present invention, the water treatment apparatus is configured such that the adsorbent is activated carbon and/or ion exchange resin.

In one aspect of the present invention, the water treatment apparatus is configured such that the concentrated effluent of the substance to be treated is generated by subjecting the water to be filtered in the storage tank for the water to be filtered, in which activated sludge is retained, to filtration by a first filtration membrane to separate a first filtered water, and further subjecting the first filtered water to filtration by a second filtration membrane having a pore with a smaller diameter than that of the first filtration membrane.

A water treatment method in one aspect of the present invention includes: separating a substance to be treated from water to be filtered by filtering the water to be filtered that contains the substance to be treated; mixing, with ozone water, concentrated effluent of the substance to be treated in which the substance to be treated is concentrated; and supplying pulse plasma to a mixed liquid of the concentrated effluent of the substance to be treated and the ozone water.

According to the present invention, reusable water can be obtained in a relatively short time after supplying raw water to water treatment. Furthermore, the effluent containing concentrated substances to be treated generated in the water treatment process can be processed in an energy-efficient manner.

### BRIEF DESCRIPTION OF THE DRAWINGS

FIG. 1 is a schematic diagram of a water treatment apparatus according to an embodiment 1, which is one aspect of the present invention.
FIG. 2 is a schematic diagram of the water treatment apparatus according to an embodiment 2, which is one aspect of the present invention.
FIG. 3 is a schematic diagram of the water treatment apparatus according to an embodiment 3, which is one mode of the present invention.
FIG. 4 is a diagram showing the relationship between the oxidation potentials of various free radicals and the bond energies between various elements.
FIG. 5(a) is a structural formula of perfluorooctanoic acid as an example of an organic fluorine compound, and FIG. 5(b) is an explanatory diagram of the decomposition process of perfluorooctanoic acid.
FIG. 6(a) is a mode of the present invention applied to a small-scale facility, FIG. 6(b) is a mode of the present invention applied to a medium-scale facility, and FIG. 6(c) is a mode of the present invention applied to a large-scale facility.
FIG. 7 is a flowchart of the preliminary test for the pulse plasma discharge treatment process of the present invention.
FIG. 8 is a schematic diagram of a water treatment apparatus according to an embodiment of the present invention.
FIG. 9 shows PFOS concentration, fluoride ion concentration, and PFOS reduction rate at water quality evaluation points (1), (2), and (3) for PFOA-containing water treated by the pulse plasma discharge in the preliminary test.
FIG. 10 shows PFOA concentration, fluoride ion concentration, and PFOA reduction rate at water quality evaluation points (1), (2), and (3) for PFOA-containing water treated by the pulse plasma discharge in the preliminary test.
FIG. 11 shows reduction rate of the combined total amount of PFOS and PFOA, combined total amount of PFOS and PFOA, and total amount of fluoride ions at water quality evaluation points (1), (2), and (3) when water to be treated is treated using an ozone water mixing treatment process and the pulsed plasma discharge treatment process.

### MODE FOR IMPLEMENTING THE INVENTION

In the following, embodiments of the present invention will be explained by referring to the drawings.

A water treatment method and water treatment apparatus of the present invention decompose a substance to be treated in an energy-efficient manner by first mixing pretreated water (hereinafter referred to as "concentrated effluent of substance to be treated"), which has been concentrated by solid-liquid separation of raw water, with ozone water, and then exposing it to pulse plasma. The present invention can decompose not only organic matter typically decomposed in general water treatment, but also recalcitrant organic compounds such as organofluorine compounds (hereinafter referred to as "PFAS"), which were difficult to decompose with a conventional water treatment apparatus.

### [Embodiment 1]

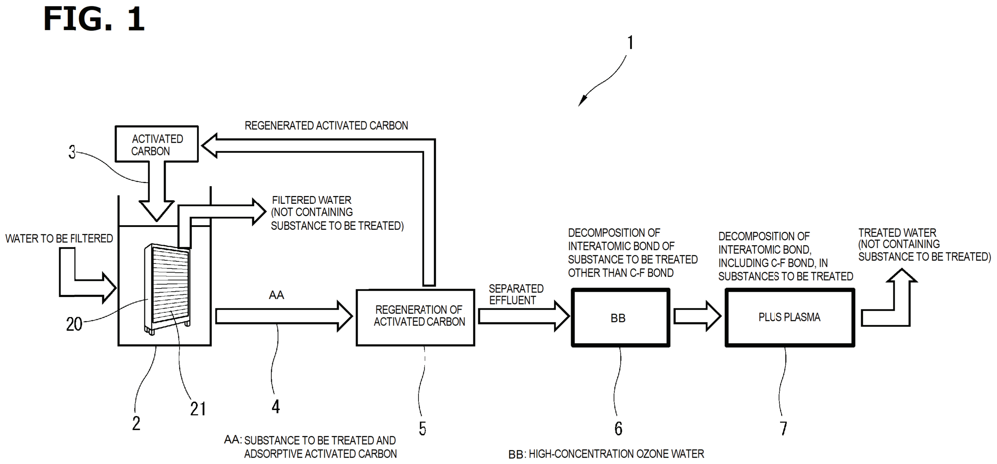

A water treatment apparatus 1 of an embodiment 1 of the present invention shown in FIG. 1 is provided with a storage tank 2 for water to be filtered, an adsorbent addition means 3, an adsorbent transfer means 4, an adsorbent regeneration device 5, an ozone water mixing tank 6, and a pulse plasma discharge tank 7.

The storage tank 2 for water to be filtered stores water to be filtered that contains a substance to be treated, which is subjected to filtration. A membrane filtration device 20 is immersed in the water to be filtered. Furthermore, activated carbon is added to the water to be filtered as an adsorbent. The membrane filtration device 20 is equipped with a filtration membrane 21 that draws in the water to be filtered and separates filtered water not containing the substance to be treated from the water to be filtered. A ceramic membrane is preferred as the filtration membrane 21. Examples of such a ceramic membrane include those made from alumina-based ceramics (mainly composed of alumina). The filtered water is supplied to a treatment facility (not shown). The substance to be treated is adsorbed onto the added activated carbon.

The adsorbent addition means 3 adds the activated carbon to the water to be filtered within the storage tank 2 for water to be filtered. As the adsorbent addition means 3, a well-known powder supply device, such as a powder feeder used in effluent treatment technology, is applied.

The adsorbent transfer means 4 transfers the activated carbon, which has adsorbed the substance to be treated, from the storage tank 2 for water to be filtered to the adsorbent regeneration device 5. As the adsorbent transfer means 4, a pump that transfers the liquid phase containing the activated carbon from the storage tank 2 for water to be filtered to the adsorbent regeneration device 5 is applied.

The adsorbent regeneration device 5 regenerates the activated carbon by separating it from the liquid phase containing the activated carbon and then desorbing the substance to be treated from the activated carbon via chemical treatment. For separating the activated carbon, a separation device known in effluent treatment technology, such as a screen device, is applied. As the chemical treatment, a known chemical treatment method is applied in which the activated carbon is brought into contact with regeneration chemicals, for example, an alkaline and acidic solution described in the patent document 2.

The ozone water mixing tank 6 decomposes interatomic bonds other than C-F bonds in the substance to be treated by mixing, with ozone water in either a batch or continuous manner, concentrated effluent of substance to be treated in which the substance to be treated separated from the activated carbon is concentrated in the adsorbent regeneration device 5.

As the ozone water, a solution obtained by dissolving ozone gas in raw water can be applied. This dissolution method can employ existing ozone water generation methods, such as a method in which raw water and ozone gas are supplied to a gas-liquid mixer to generate ozone water.

The raw water may be any suitable water capable of dissolving ozone gas, such as pure water or ultrapure water. If necessary, the purity of the raw water may be increased using a known pure water production apparatus.

The ozone gas can be generated using a known ozone gas generator. An example of such an ozone gas generator is the Pure Ozone Generator manufactured by Meidensha, described in the patent document 3. When generating ozone gas using the above-mentioned Pure Ozone Generator, ozone gas with an ozone concentration of 50 vol% or higher and an ozone partial pressure of 30 kPa (abs) or lower can be supplied to the gas-liquid mixer, and high-concentration (100 ppm or higher) ozone water can be safely generated.

Examples of the gas-liquid mixer include an ejector, aspirator, jet pump, and the like, but are not limited thereto, and various forms may be applied.

The gas-liquid mixer includes, for example, a raw water flow passage through which the received raw water flows, and an ozone gas introduction passage connected to this raw water flow passage for introducing the received ozone gas into the raw water flow passage.

In the ozone gas introduction passage, suction pressure is generated according to Bernoulli's principle, corresponding to the flow rate (velocity) of the raw water flowing in the raw water flow passage. In the ozone gas introduction passage, vapor corresponding to the saturated vapor pressure of the raw water is generated.

Since the raw water possesses characteristics equivalent to water (such as saturated vapor pressure and water vapor pressure characteristics), a suction range is derived based on the raw water and the ozone gas receiving pressure of the gas-liquid mixer. This range corresponds to the raw water temperature range where the vapor pressure in the ozone gas introduction passage becomes lower than the receiving pressure. The suction range is appropriately set (for example, 25°C or below as described in the patent document 4) according to the general solubility characteristics of the gas with respect to the raw water (the tendency for solubility to increase as the raw water temperature decreases). Therefore, if the temperature of the raw water falls outside the suction range, the temperature of the raw water is adjusted to within the range either by adjusting the temperature of the raw water before being supplied to the gas-liquid mixer or by adjusting the temperature of the gas-liquid mixer into which the raw water has been introduced.

The ozone water generated in the gas-liquid mixer may contain a concentration adjustment gas added to stabilize the ozone concentration before being supplied to the ozone water mixing tank 6, or it may also be supplied, in a circulating manner, to or temporarily stored in the ozone water generation section equipped with the gas-liquid mixer. Furthermore, when achieving higher concentration using the concentration adjustment gas, a method such as injecting carbon dioxide gas into the ozone water to acidify it may be employed.

According to the above ozone water generation method, high-concentration ozone water with an ozone concentration of 100 ppm or higher (for example, 300 to 400 ppm) can be safely generated.

In the pulse plasma discharge tank 7, pulse plasma is applied to the mixed liquid of the ozone water and the concentrated effluent of substance to be treated supplied from the ozone water mixing tank 6. Hereinafter, applying pulse plasma to water to be treated, such as the concentrated effluent of substance to be treated or the mixed liquid, is also referred to as "pulse plasma discharge treatment" or "pulse discharge treatment."

As a method for applying the pulse plasma, for example, a pulse voltage is applied between a pair of electrodes immersed in the mixed liquid to discharge the pulse plasma into the mixed liquid.

Another mode of the method for applying the pulse plasma includes discharging the pulse plasma into the mixed liquid by applying a pulse voltage between one electrode positioned in the gas phase near the stable liquid surface of the mixed liquid within the pulse plasma discharge tank 7 and the other electrode immersed in the mixed liquid.

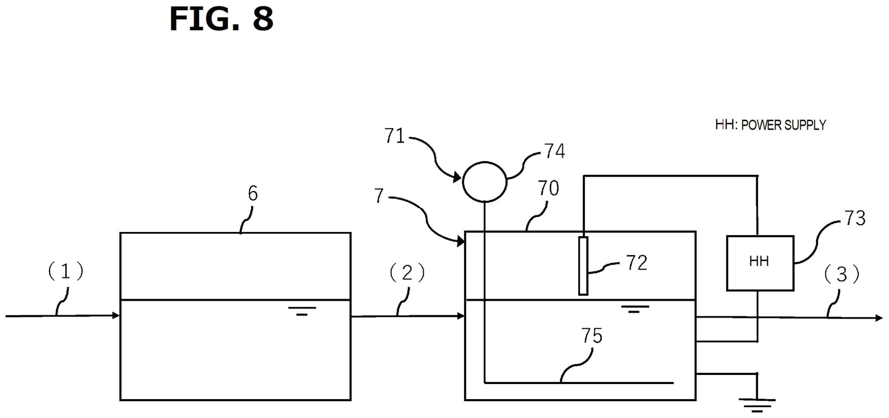

The other electrode may be the configuration of the pulse plasma discharge tank 7 shown in FIG. 8. A pulse plasma discharged from one end of the electrode 72 near the liquid surface, after a pulse voltage is applied between the electrode 72 functioning as one electrode and the conductive pulse plasma discharge tank 7 functioning as the other electrode in the pulse plasma discharge tank 7, is supplied to the mixed liquid via the gas phase near the liquid surface.

The power supply for applying the pulse voltage is capable of generating the pulse plasma that can break the interatomic bonds (for example, the bond between carbon and fluorine) of the substance to be treated, which have a bond energy higher than the oxidation potential of hydroxyl radicals (hereinafter, -OH). As the electrodes and power supply, for example, those described in the patent document 5, are applicable.

In addition, the mixed liquid within the pulsed plasma discharge tank 7 may be aerated with air using an aeration device 71, as shown in FIG. 8. By this aeration, the pulse plasma discharging is stabilized, and the reduction rate of PFOS and PFOA is improved.

Referring to FIG. 1, the function and an example of operation of the water treatment apparatus 1 of the embodiment 1 will be described.

The activated carbon is added to water to be filtered that is introduced into the storage tank 2 for water to be filtered from the adsorbent addition means 3. Substance to be treated in the water to be filtered is adsorbed by the activated carbon. The filtration membrane 21 of the membrane filtration device 20 that is immersed in the water to be filtered has sufficiently small pores to block and capture the activated carbon, thereby removing the activated carbon via the filtration membrane 21. The adsorption of the substance to be treated and the separation of the activated carbon is applicable to large-scale water treatment, and the rapid production of large volumes of filtered water through the filtration membrane 21 can be achieved. The liquid phase containing the activated carbon adsorbing the substance to be treated is transferred to the adsorbent regeneration device 5 by the adsorbent transfer means 4. On the other hand, the filtered water containing no substance to be treated that has been separated by the filtration membrane 21 is transferred outside the system.

In the adsorbent regeneration device 5, the activated carbon separated from the liquid phase by the screen, and the like, comes into contact with the regeneration chemical solution. With this, the substance to be treated is desorbed from the activated carbon, thereby regenerating the activated carbon. Organic matters that are easily decomposed may be decomposed during this regeneration process. However, when the substance to be treated is a recalcitrant organic matter such as PFAS, it is not decomposed and is instead concentrated to a high concentration in the regeneration effluent. This concentrated effluent of substance to be treated is supplied to the ozone water mixing tank 6.

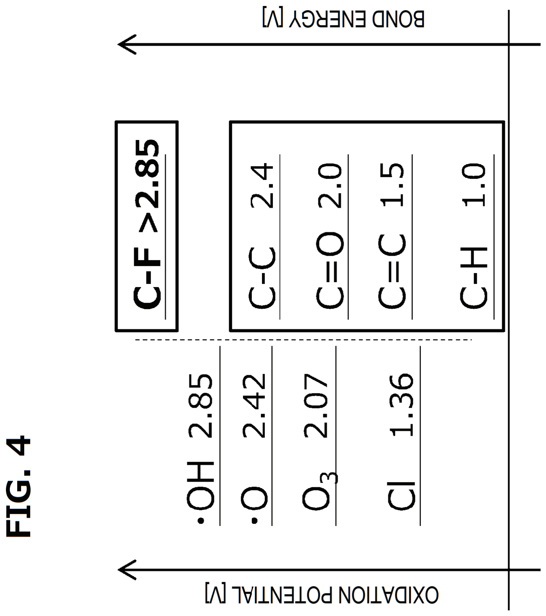

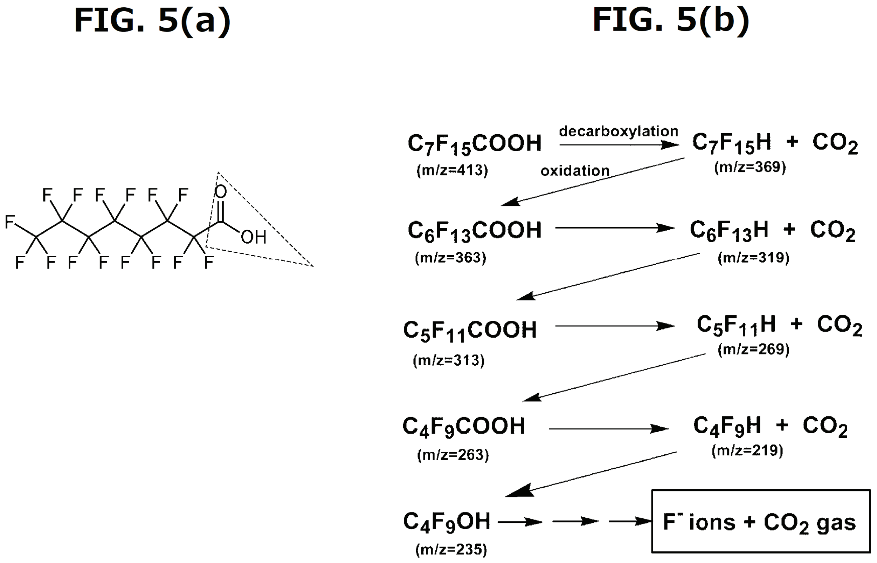

In the ozone water mixing tank 6, the interatomic bonds of the substance to be treated other than C-F are broken by the contact between the concentrated effluent of substance to be treated and the ozone water. Specifically, the interatomic bonds (for example, C-C bond, C=O bond, C=C bond, C-H bond) possessing bond energies lower than the oxidation potential of ·OH, as shown in FIG. 4 (non-patent document 1), are oxidatively decomposed by the active species (-OH, ·O, O₃) in the ozone water. For example, when the substance to be treated is PFOA (perfluorooctanoic acid) that is a type of PFAS shown in FIG. 5(a) (non-patent document 2), it is decomposed by repeated decarboxylation and oxidation of the straight-chain carbon terminal enclosed by a dashed line due to the oxidizing power of the active species. However, PFOA containing C-F bonds or its decomposition products are not completely decomposed by the oxidizing power of the active species, and the liquid phase containing these is supplied to the pulse plasma discharge tank 7.

In the pulse plasma discharge tank 7, the mixed liquid introduced from the ozone water mixing tank 6 is aerated with air. In the mixed liquid, the interatomic bonds of the substance to be treated having a bond energy higher than the oxidation potential of ·OH is broken by the pulse plasma generated by the applying of the pulse voltage. For example, as shown in FIG. 5(b), decomposition products of PFOA containing C-F bonds that are present in the liquid phase supplied from the ozone water mixing tank 6 are decomposed into fluoride ions and carbon dioxide gas by the pulse plasma.

The pulse plasma can decompose C-F bonds but does not selectively decompose C-F bonds. Therefore, when generating the pulse plasma in water to be treated (namely, the concentrated effluent of substance to be treated) containing substances like PFOA that possess C-C bonds, C=O bonds, and the like, in addition to C-F bonds, its energy is also expended on decomposing C-C bonds or C=O bonds, and there is possibility that significant energy and time are required for C-F bond decomposition.

Therefore, as in the present embodiment, interatomic bonds in the organic matter, which have oxidation potentials lower than those of ozone water, are decomposed by the ozone water, while interatomic bonds with oxidation potentials higher than those of the ozone water are decomposed by the pulse plasma. With this, the energy-efficient decomposition of recalcitrant organic matter can be performed. The treated water after pulse plasma discharge treatment is rendered harmless through the decomposition of the recalcitrant organic matter, making reuse of the effluent possible.

According to the present embodiment, reusable water can be produced through the initial filtration combining activated carbon and a ceramic membrane, allowing the residence time within the system to be shortened compared to conventional methods (patent document 1). In addition, energy efficiency is improved because the substance to be treated is decomposed using ozone water and pulse plasma after the concentration. Furthermore, the material (activated carbon) that has adsorbed the substance to be treated can be reused. Moreover, it becomes possible to decompose interatomic bonds in the substance to be treated that possess bond energies higher than the oxidation potential of hydroxyl radicals, thereby achieving the decomposition and harmless treatment of recalcitrant organic matter, such as PFAS, which are difficult with conventional water treatment.

### [Embodiment 2]

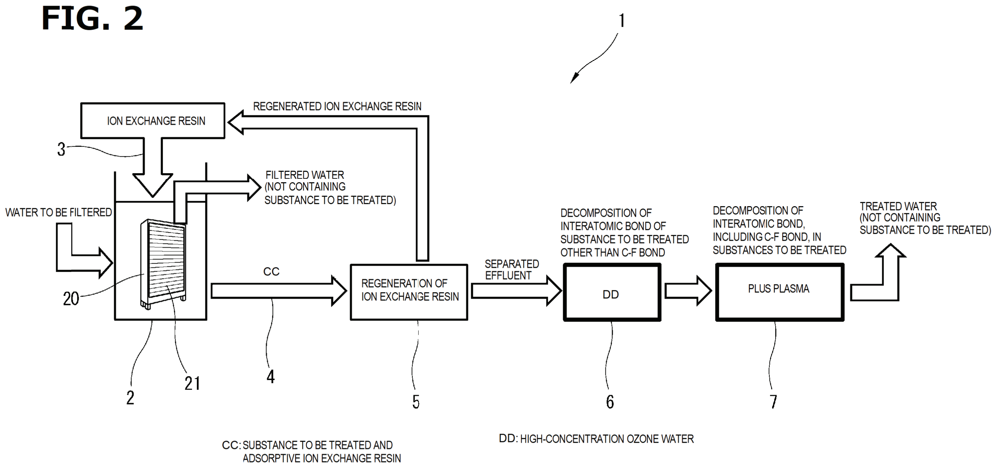

The water treatment apparatus 1 of the embodiment 2 shown in FIG. 2 is identical to the embodiment 1 except that ion exchange resin is used as an adsorbent instead of activated carbon. The ion exchange resin may be, for example, a well-known ion exchange resin described in the patent document 6. Furthermore, a regeneration solution containing regeneration agents such as acids or alkalis described in the same patent document is applied for regenerating the ion exchange resin. It is clear that this embodiment also achieves effects similar to those of the embodiment 1. In addition, the ion exchange resin may be used in combination with the activated carbon of the embodiment 1.

### [Embodiment 3]

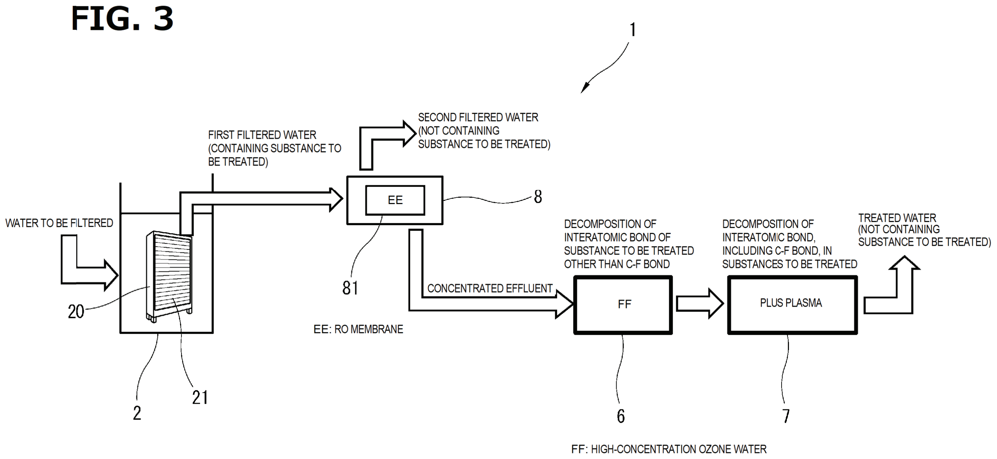

The water treatment apparatus 1 of the embodiment 3 of the present invention, shown in FIG. 3, employs a membrane bioreactor (hereinafter referred to as "MBR"). It is identical to the embodiments 1 and 2 except that activated sludge is added to the storage tank 2 for water to be filtered instead of an adsorbent, and it has a reverse osmosis membrane filter 8 instead of the adsorbent regeneration device 5.

When concentrating the substance to be treated using the reverse osmosis membrane filter 8, the storage tank 2 for water to be filtered serves as pretreatment for the reverse osmosis membrane filter 8. Therefore, in the storage tank 2 for water to be filtered of the present embodiment, the addition of the adsorbent is unnecessary. The MBR that treats organic matter decomposable by conventional biological treatment using activated sludge within the storage tank 2 for water to be filtered is effective from the perspective of enhancing the efficiency of subsequent treatment stages (reverse osmosis membrane filter 8, ozone water mixing tank 6, and pulse plasma discharge tank 7).

Referring to FIG. 3, the function and an example of operation of the water treatment apparatus 1 of the embodiment 3 will be described.

Water to be filtered introduced into the storage tank 2 for water to be filtered is aerated and agitated. The organic matter in the liquid phase within the storage tank 2 for water to be filtered, which can be decomposed by conventional biological treatment, is decomposed by the activated sludge. The filtration membrane 21 of the membrane filtration device 20 within the storage tank 2 for water to be filtered, which corresponds to a first filtration membrane of the present embodiment, possesses sufficiently small pores to block and capture the activated sludge. Consequently, the activated sludge is separated from a first filtered water by the filtration membrane 21. The first filtered water is supplied to the reverse osmosis membrane filter 8 via pump pressure.

In the reverse osmosis membrane filter 8, the first filtered water is separated by a reverse osmosis membrane (hereinafter referred to as an "RO membrane") 81, which corresponds to a second filtration membrane of the present embodiment, into a second filtered water that does not contain the substance to be treated (recalcitrant organic matter) and a concentrated effluent of subject to be treated in which the substance to be treated is concentrated. The first filtered water does not contain solids that are repelled by the RO membrane 81 or easily decomposable organic matter, but it still contains the substance to be treated, such as PFAS. The RO membrane 81 has pores with a smaller pore diameter than the filtration membrane 21, which is sufficient to block and capture the substance to be treated, thereby removing the substance to be treated from the first filtered water. The concentrated effluent of substance to be treated is sequentially supplied to the ozone water mixing tank 6 and the pulse plasma discharge tank 7, as in the embodiments 1 and 2. Meanwhile, the second filtered water is transferred outside the system.

It is clear that the present embodiment also achieves effects similar to those of the embodiments 1 and 2.

### [Other Embodiments of the Present Invention]

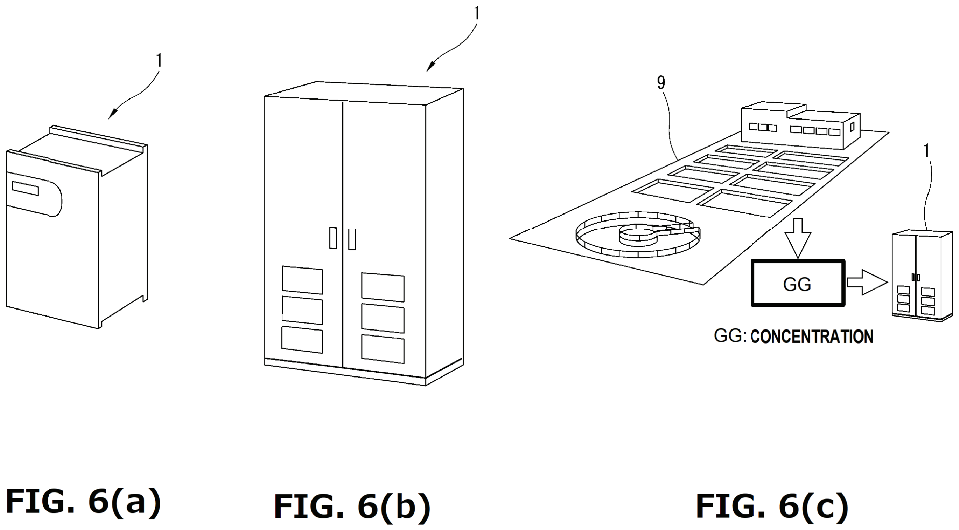

The present invention is not limited to the above embodiments and can be applied according to various industries and service types, such as those illustrated in FIG. 6, and effects similar to those of the embodiments mentioned above can be obtained.

The water treatment apparatus 1 shown in FIG. 6(a) is provided with a batch-type ozone water mixing tank 6, for example, with a treatment water volume of 100 L/h, to which the pre-collected concentrated effluent of substance to be treated is supplied and a pulse plasma discharge tank 7. The water treatment apparatus 1 of this embodiment does not have power sources such as pumps and is designed for installation in small-scale facilities, such as laboratories.

The water treatment apparatus 1 shown in FIG. 6(b) is provided with a batch-type ozone water mixing tank 6 , for example, with a treatment water volume of 100-1000 L/h and a pulse plasma discharge tank 7. It can be installed in existing medium-scale facilities and is equipped with a power source such as a pump, so as to be operated as standalone system.

The water treatment device 1 shown in FIG. 6(c) is provided with a batch-type or continuous-type ozone water mixing tank 6 and a pulse plasma discharge tank 7, for example, with a treatment water volume of 1000 L/h or more. It is applicable to large-scale facilities, such as an existing or newly constructed water purification plants 9, designed for total volume treatment. The ozone water mixing tank 6 of this embodiment receives, for example, a concentrated effluent of substance to be treated, which has been pre-generated at the water purification plant 9 via the adsorbent and membrane filtration.

Furthermore, the filtration membrane applied to the storage tank for water to be filtered of the water treatment device of the present invention is not limited to the immersion-type filtration membrane of the embodiments 1 to 3, and an external-type filtration membrane can also be applied.

### EXAMPLES

In the following, examples of the present invention will be explained.

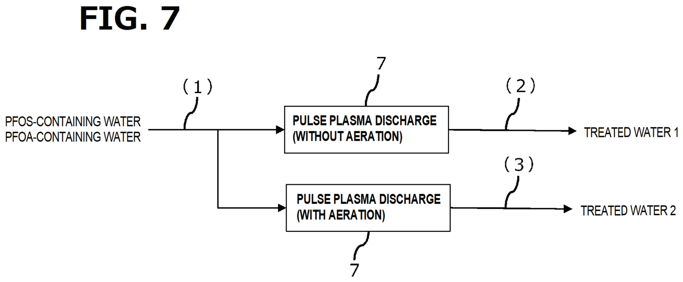

Prior to the examples of the present invention, preliminary tests of pulse discharge treatment were conducted using PFOS (perfluorooctane sulfonic acid)-containing water and PFOA-containing water as the water to be treated. Referring to FIG. 7, an overview of the preliminary tests will be explained.

The PFOS-containing water was prepared by dissolving PFOS in tap water to have a PFOS concentration of 7,200 µg/L. Similarly, the PFOA-containing water was prepared by dissolving PFOA in tap water to have a PFOA concentration of 11,000 µg/L.

The pulse plasma discharge tank 7 shown in FIG. 7 for "without aeration" and "with aeration" includes an aeration device 71, an electrode 72, and a pulse power supply 73, as shown in the pulse plasma discharge tank 7 of FIG. 8. A main tank body portion 70 of the pulse plasma discharge tank 7 functions as a GND electrode. The aeration device 71 includes a blower 74 that introduces air from the atmosphere when the pulsed plasma discharge tank 7 is configured as the "with aeration" type, and an air diffuser pipe 75 connected to the blower 74 that aerates the water to be treated within the pulsed plasma discharge tank 7. The electrode 72 consists of a round bar electrode for high-voltage output, and its distal end is positioned in the gas phase near the liquid surface within the pulse plasma discharge tank 7, such that by applying a pulse voltage from the pulse power supply 73, a pulse plasma is generated between the electrode 72 and the pulse plasma discharge tank 7. The pulse plasma is supplied to the mixed liquid via the gas phase near the liquid surface, flows along the liquid surface of the mixed liquid, and then flows to ground (earth) via the pulse plasma discharge tank 7.

The main tank body portion 70 of the pulse plasma discharge tank 7 is configured as a cylindrical stainless steel container with an inner diameter of 100 mm and a capacity of 700 mL. Within the main tank body portion 70, 300 mL of the water to be treated is introduced, and a stainless steel round bar electrode 72 with a diameter of 3 mm is disposed in the gas phase near the liquid surface (1 mm above the liquid surface) at the center of the main tank body portion 70. A high-voltage pulse is then applied between the electrode 72 and the main tank body portion 70 using a pulse power supply 73 to generate a pulsed plasma discharge. In the pulse plasma discharge tank 7 with "aeration," aeration was used in combination to achieve agitation of the water to be treated within the main tank body portion 70 and discharge within the bubbles. The pulse plasma discharge conditions for the water to be treated are shown in Table 1 below.

**[Table 1]**

| | |
|---|---|
| Applied pulse voltage | Approximately 22 kV |
| Pulse width | Approximately 250 ns |
| Frequency | 10 Hz |
| Discharge treatment time | 10 min. |
| Aeration air flow rate | 0.7 L/min. (with aeration) |

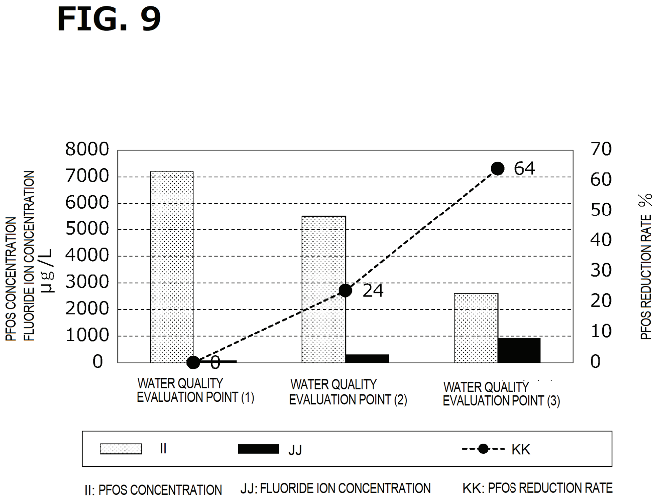

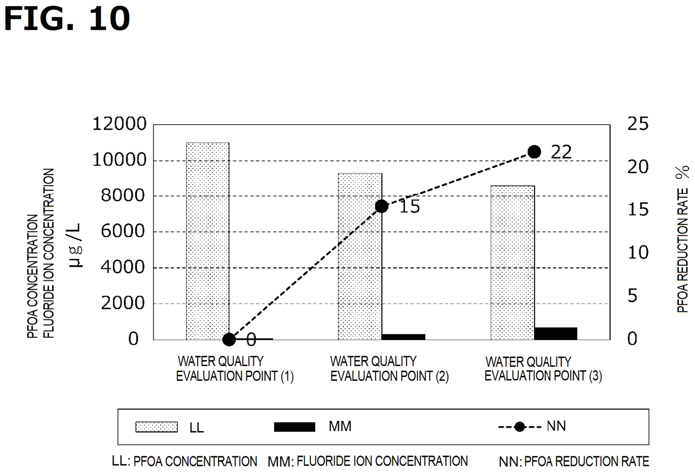

FIG. 9 shows the PFOS concentration, fluoride ion concentration, and PFOS reduction rate achieved by the pulse discharge treatment of PFOS-containing water in the preliminary test. FIG. 10 shows the PFOS concentration, fluoride ion concentration, and PFOS reduction rate achieved by the pulse discharge treatment of PFOA-containing water.

Water quality evaluation point (1) in FIG. 7 that is shown on the horizontal axis of FIG. 9 corresponds to PFOS-containing water. The water quality evaluation point (1) in FIG. 7 that is shown on the horizontal axis of FIG. 10 corresponds to PFOA-containing water. In FIGS. 9 and 10, a treated water 1 at water quality evaluation point (2) is the treated water from pulse plasma discharge "without aeration", and a treated water 2 at water quality evaluation point (3) is the treated water from pulse plasma discharge "with aeration."

As shown in the results of FIG. 9, the water quality evaluation point (3) exhibited a lower PFOS concentration and a higher fluoride ion concentration compared to the water quality evaluation point (2). The PFOS reduction rate achieved by the pulse plasma discharge treatment "with aeration" was 40% higher than that of the pulsed discharge treatment "without aeration."

As shown in the results of FIG. 10, the water quality evaluation point (3) exhibited a lower PFOA concentration and a higher fluoride ion concentration compared to the water quality evaluation point (2). The PFOA reduction rate achieved by pulse discharge treatment "with aeration" was 7% higher than that achieved by pulse discharge treatment "without aeration."

The preliminary tests of pulse discharge treatment with and without aeration demonstrated that the performing of air aeration contributed to the stabilization of the pulse plasma discharge and an increase in the reduction rates of PFOS and PFOA. In addition, experiments revealed that by positioning the distal end of the high-voltage electrode in the gas phase near the liquid surface within the pulse plasma discharge tank 7, stable pulse streamer discharge with respect to the liquid surface within the pulse plasma discharge tank 7 was performed. The following Example 1 is based on the results of the preliminary tests mentioned above.

### [EXAMPLE 1]

As the water to be treated in Example 1, water to be treated containing PFOS and PFOA (PFOS concentration: 3,300 µg/L, PFOA concentration: 5,300 µg/L, combined PFOS and PFOA concentration: 8,600 µg/L) was used. This water to be treated was prepared by dissolving reagent-grade PFOS and PFOA in tap water, similar to the preliminary tests. The water to be treated obtained by subjecting this water to ozone water mixing treatment in the ozone water mixing tank 6 shown in FIG. 8, followed by pulse plasma discharge treatment in the pulse plasma discharge tank 7, was used as the treated water in Example 1.

### (Ozone Water Mixing Treatment Process)

The ozone water mixing treatment process is performed in the ozone water mixing tank 6 shown in FIG. 8. The water to be treated and high-concentration ozone water were supplied to the ozone water mixing tank 6 and mixed. This treatment was performed in a batch type, aiming to oxidatively decompose organic compounds, including PFAS in the water to be treated using the ozone dissolved in the high-concentration ozone water and the reactive oxygen species generated when this ozone decomposes. As mentioned above, the decomposition of the C-F bond present in PFAS was expected to be difficult using the oxidation potential of ozone and reactive oxygen species alone. Therefore, the process aimed to break or decompose C-C, C=C, and other bonds in the organic compounds, or to achieve the mineralization of these organic compounds. High-concentration ozone water was produced using the above-mentioned pure ozone generator. The conditions for the ozone water mixing treatment process in this example are shown in Table 2 below.

**[Table 2]**

| | |
|---|---|
| Initial dissolved ozone concentration of high-concentration ozone water | 400 mg/L |
| Mixing ratio (volume ratio) of water to be treated and high-concentration ozone water | Water to be treated : High-concentration ozone water = 1 : 1 |
| Contact time between water to be treated and high-concentration ozone water | 30 min. |

### (Pulse Discharge Treatment Process)

The pulse discharge treatment process is performed in the pulse plasma discharge tank 7 shown in FIG 8. The treated water (a mixed liquid of the water to be treated and high-concentration ozone) from the ozone water mixing treatment process (ozone water mixing tank 6) is supplied to the pulse plasma discharge tank 7. The aeration device 71 aerates the mixed liquid with air via the diffuser pipe 75 using the blower 74. The electrode 72 has a distal end positioned in the gas phase near the liquid surface within the pulse plasma discharge tank 7, and a pulse voltage from the pulse power supply 73 is applied to generate a pulse plasma between the electrode 72 and the pulse plasma discharge tank 7. The pulse plasma is supplied to the mixed liquid via the gas phase near the liquid surface, flows along the liquid surface of the mixed liquid, and flows to ground (earth) via the pulse plasma discharge tank 7.

The treated water in the ozone water mixing treatment process exhibited a light purple color even immediately before the pulse discharge treatment process, and the pulse discharge treatment was performed in a state in which dissolved ozone was present. In this example, the pulse discharge treatment was performed while aerating the mixed liquid within the pulse plasma discharge tank 7 with air using the aeration device 71.

The conditions for the pulse discharge treatment process in the example are the same as those shown in Table 1.

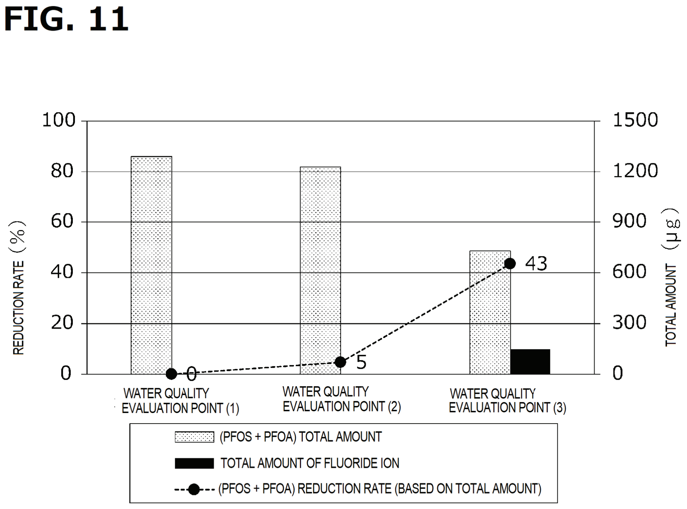

FIG. 11 shows the reduction rate of the combined total amount of PFOS and PFOA, the combined total amount of PFOS and PFOA, and the total amount of fluoride ions at water quality evaluation points (1), (2), and (3) in FIG. 8, when the water to be treated was processed using the ozone water mixing treatment process and the pulse discharge treatment process.

In FIG. 8, the water quality evaluation point (1) represents the water to be treated before it is supplied to the ozone water mixing treatment process (ozone water mixing tank 6). The water quality evaluation point (2) represents the treated water from the ozone water mixing treatment process. The water quality evaluation point (3) represents the treated water from the pulse discharge treatment process (pulse plasma discharge tank 7).

As described above, in the ozone water contact treatment process, the water to be treated and high-concentration ozone water are mixed in a ratio of 1:1. Therefore, due to the dilution effect, the concentration of substances in the raw water is reduced to one-half. To evaluate the oxidative decomposition of the contained substances in the water to be treated by ozone and the decomposition of these contained substances by pulse plasma discharge in this example, the contained substances at the water quality evaluation points (1), (2), and (3) were expressed and evaluated by total amount rather than concentration.

As shown in the results of FIG. 11, by the combination of ozone water contact treatment and pulse discharge treatment, a reduction rate in the combined total amount of PFOS and PFOA was 43%. In addition, the fluoride ion amount increased after the pulse discharge treatment. The increase in fluoride ions is presumed to result from the breaking of the C-F bonds in PFOS and PFOA contained in the water to be treated by the pulse discharge treatment. In addition, since fluoride ions did not increase with the ozone water contact treatment, it can be considered that the pulse discharge treatment is more effective than the ozone water contact treatment for breaking the C-F bonds of PFOS and PFOA.

As clearly demonstrated by the results of Example 1 above, the combination of the ozone water contact treatment and pulse discharge treatment was confirmed to be effective for removing PFOS and PFOA.

### (Comparative Example 1)

To verify the reduction effect of PFOS based on the presence or absence of the ozone water contact treatment prior to the pulse discharge treatment, in Comparative Example 1, pure water was mixed with water to be treated in the ozone water mixing tank 6 instead of high-concentration ozone water, followed by the pulse discharge treatment in the pulse plasma discharge tank 7. The mixing ratio (volume ratio) of the water to be treated and pure water was set to water to be treated : pure water = 1:1.

The PFOS reduction rate of the treated water from the pulse discharge treatment process in Example 1 and Comparative Example 1, along with the PFOS amount and fluoride ion amount of each treated solution, are shown in Table 3 below.

**[Table 3]**

| Measurement and analysis items | Unit | PFOS-containing water to be treated | Treated water in Comparative example 1 | Treated water in Example 1 |
|---|---|---|---|---|
| Fluoride ion concentration | µg | 0 | 120 | 150 |
| PFOS | µg/L | 3300 | 720 | 430 |
| PFOS amount | µg | 495 | 216 | 129 |
| PFOS reduction rate | % | 0 | 56 | 74 |

The results in Table 3 show that the PFOS reduction rate in Comparative Example 1 was 56%, whereas the PFOS reduction rate in Example 1 was 74%. It was confirmed that performing ozone water contact treatment prior to the pulse discharge treatment promoted the decomposition and removal of PFOS during the pulse discharge treatment.

### EXPLANATION OF SYMBOLS

1...Water treatment apparatus
2... Storage tank for water to be filtered, 20...Membrane filtration device,
21...Filtration membrane
3...Adsorbent addition means
4...Adsorbent transfer means
5...Adsorbent regeneration device
6...Ozone water mixing tank
7...Pulse plasma discharge tank, 71...Aeration device, 72...Electrode, 73...Pulse power supply, 74...Blower, 75...Diffuser pipe
8...Reverse osmosis membrane filter, 81...RO membrane
9...Water purification plant

## Claims

1. A water treatment apparatus comprising:
a storage tank for water to be filtered for storing the water to be filtered that contains a substance to be treated that is subjected to filtration;
an ozone water mixing tank for mixing, with ozone water, concentrated effluent of the substance to be treated in which the substance to be treated separated from the water to be filtered by the filtration is concentrated; and
a pulse plasma discharge tank for supplying pulse plasma to a mixed liquid of the concentrated effluent of the substance to be treated and the ozone water.

2. The water treatment apparatus according to claim 1,
wherein a power supply is provided that is capable of generating the pulse plasma that breaks an interatomic bond of the substance to be treated that has a bond energy higher than an oxidation potential of a hydroxyl radical.

3. The water treatment apparatus according to claim 2,
wherein the interatomic bond is a bond between carbon and fluorine.

4. The water treatment apparatus according to claim 1,
wherein the concentrated effluent of the substance to be treated is generated during a regeneration process of an adsorbent added to the storage tank for the water to be filtered.

5. The water treatment apparatus according to claim 4,
wherein the adsorbent is activated carbon and/or ion exchange resin.

6. The water treatment apparatus according to claim 1,
wherein the concentrated effluent of the substance to be treated is generated by subjecting the water to be filtered in the storage tank for the water to be filtered, in which activated sludge is retained, to filtration by a first filtration membrane to separate a first filtered water, and further subjecting the first filtered water to filtration by a second filtration membrane having a pore with a smaller diameter than that of the first filtration membrane.

7. The water treatment apparatus according to claim 1,
wherein the mixed liquid is aerated with air.

8. A water treatment method comprising:
separating a substance to be treated from water to be filtered by filtering the water to be filtered that contains the substance to be treated;
mixing, with ozone water, concentrated effluent of the substance to be treated in which the substance to be treated is concentrated; and
supplying pulse plasma to a mixed liquid of the concentrated effluent of the substance to be treated and the ozone water.
